## Europäisches Patentamt
## European Patent Office
## Office européen des brevets

(19)

(11) Veröffentlichungsnummer: **0 045 010**
**B1**

(12) # EUROPÄISCHE PATENTSCHRIFT

(45) Veröffentlichungstag der Patentschrift:
06.07.83

(51) Int. Cl.³: **G 02 B 21/26**

(21) Anmeldenummer: **81105555.7**

(22) Anmeldetag: **15.07.81**

(54) **Objekthalter für inverse Mikroskope.**

(30) Priorität: **25.07.80 DE 3028154**

(43) Veröffentlichungstag der Anmeldung:
**03.02.82 Patentblatt 82/5**

(45) Bekanntmachung des Hinweises auf die Patenterteilung:
**06.07.83 Patentblatt 83/27**

(84) Benannte Vertragsstaaten:
**AT FR GB**

(56) Entgegenhaltungen:
**DE-B-2 242 887**
**DE-U-7 232 969**
**US-A-3 765 745**
**US-A-4 012 111**

(73) Patentinhaber: **Firma Carl Zeiss, D-7920 Heidenheim (Brenz) (DE)**

(72) Erfinder: **Fischer, Horst, Fahrbachstrasse 232, D-7080 Aalen (DE)**
Erfinder: **Möllring, Friedrich K, Dr., Max-Reger-Strasse 7, D-7080 Aalen (DE)**

Objekthalter für inverse Mikroskope

Die Erfindung betrifft einen Objekthalter für inverse Mikroskope, d. h. Mikroskope, bei denen die Objekte von unten her betrachtet werden.

Diese inversen Mikroskope, die ursprünglich zur Untersuchung von sich auf Gefäßböden absetzenden Proben wie chemischen Reaktionsprodukten, Mikroorganismen, Gewebekulturen etc. gebaut wurden, finden zunehmend als Universal-Mikroskope Verwendung. Denn auch bei der Betrachtung »normaler« d. h. der Untersuchung mit aufrechten Mikroskopen zugänglicher Proben treten keinerlei Nachteile auf; im Gegenteil, die meist größere Stabilität des inversen Mikroskops wirkt sich oftmals vorteilhaft aus.

Bei der Untersuchung mit Hilfe eines inversen Mikroskops werden diese Objekte mit unterschiedlichsten Abmessungen im einfachsten Fall lediglich auf den im Bereich des Sehfeldes mit einer Öffnung versehenen Objekttisch aufgelegt. So aufgelegte Proben können jedoch verrutschen. In den meisten Fällen ist eine Fixierung der Probe auf der Tischoberfläche unerläßlich.

Aus dem DE-U-7 232 969 ist es bekannt, zur Halterung unterschiedlicher Objekte verschiedene, auf die Maße der zu untersuchenden Objekte abgestimmte, austauschbare Spezialobjekthalter zu verwenden. Der Nachteil eines solchen Systems liegt nicht allein im Kostenaufwand für eine Serie von verschiedenen Objekthaltern. Beim Arbeiten mit verschiedenen Objekten ist außerdem der Benutzer gezwungen, laufend die Objekthalter auszuwechseln, was unbequem und um so zeitraubender ist, je mehr Halter das System umfaßt.

Es ist daher die Aufgabe der vorliegenden Erfindung, einen Objekthalter für inverse Mikroskope zu schaffen, der möglichst viele Objekte mit unterschiedlichsten Abmessungen aufnehmen kann und einfach zu handhaben ist.

Diese Aufgabe wird gemäß dem kennzeichnenden Teil des Anspruchs 1 dadurch gelöst, daß der Objekthalter im wesentlichen aus zwei gegeneinander verschiebbar gelagerten Platten besteht, deren einander gegenüberliegenden Seiten mit Abstufungen zum Aufsetzen der Proben versehene Einbuchtungen besitzen, die sich zu einer durch Verschieben der Platten in ihren Abmessungen veränderlichen Öffnungen ergänzen.

Der Vorteil der Erfindung ist darin zu sehen, daß in dem Halter mit einem Handgriff Objekte unterschiedlicher Größe und Form fixiert und eventuell durch den oberen Teil der Abstufung geklemmt werden können, dabei aber unabhängig von der Größe der Objekte keine wesentliche Abschattung ihrer Unterseite d. h. des Objektfeldes durch den unteren Teil der Abstufung stattfindet, auf den die Objekte aufgesetzt werden.

Zweckmäßig besitzen die Einbuchtungen V-Form, wodurch eine besonders sichere Halterung von zylindrischen Gefäßen mit stark unterschiedlichen Durchmessern wie Petrischalen und Erlenmeyerkolben erzielt wird.

Zur Aufnahme standardisierter, rechteckiger Objektträger besitzt der obere, zurücktretende Teil der Stufen auf jeder Platte ein Paar Einkerbungen, so daß der Objektträger nach dem Auseinanderziehen der Platten in die seinen Abmessungen entsprechende Vertiefung eingelegt werden kann. Bei häufigen Arbeiten mit Standard-Objektträgern ist es weiterhin vorteilhaft, den entsprechenden Auszug der Platten mit einer Raste zu versehen, die ein schnelles Einstellen dieser Position erlaubt und ein zu leichtes Öffnen der durch die Platten gebildeten Zange und damit ein Durchfallen des Objektträgers verhindert.

Zur Aufnahme größerer Gewebekulturflaschen mit rechteckigem Querschnitt oder sogenannter Terasakikammern können die oberen, zurücktretenden Teile der Abstufung im Randbereich auf beiden Platten vorteilhaft parallel zueinander verlaufen. Zur Sicherung gegen seitliches Verschieben längs der parallelen Abstufung dient dann ein seitlicher Anschlag z. B. in Form zweier Gewindestifte, die, soweit sie beim Haltern sehr großer Objekte stören, leicht entfernt werden können.

Damit in jeder Stellung ein Verschieben der Platten z. B. durch unbeabsichtigtes Anstoßen erschwert ist, stehen diese zweckmäßig im Reibschluß mit ihren Führungen oder sind durch Federkraft gegeneinander verspannt, so daß das betreffende Objekt in seiner Aufnahme geklemmt ist. Das schnelle Wechseln der Proben wird erleichtert, wenn beide Platten bewegungsmäßig so miteinander gekoppelt sind, daß sich beim Verschieben einer Platte die zweite gegenläufig dazu bewegt. Der Benutzer kann dann mit einer Hand den Objekthalter bedienen und mit der anderen Hand das Objekt auf die gemäß seinen Abmessungen zurückgezogene Abstufung aufsetzen.

Im folgenden wird die Erfindung anhand der Fig. 1—3 der beigefügten Zeichnungen erläutert.

Fig. 1 zeigt eine Aufsicht auf den erfindungsgemäßen Objekthalter;

Fig. 2 zeigt eine modifizierte Version des Objekthalters aus Fig. 1;

Fig. 3 zeigt einen Schnitt des Objekthalters längs der Linie III-III in Fig. 1.

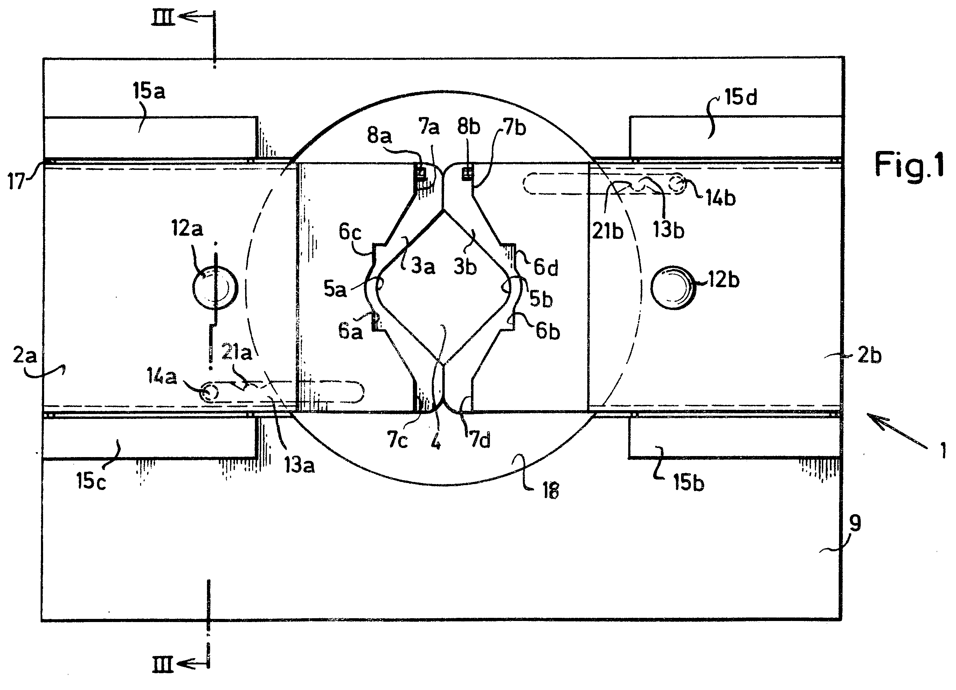

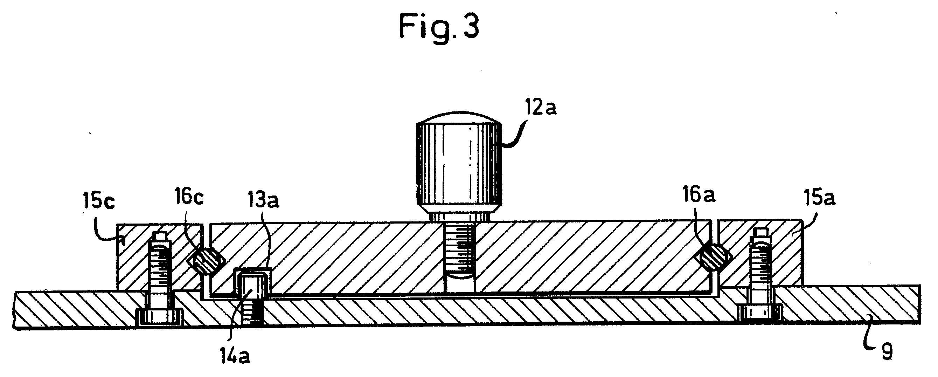

Der Objekthalter 1 in Fig. 1 bzw. in Fig. 3 besteht im wesentlichen aus einer Grundplatte 9 mit einer zentralen Bohrung 18, um die je ein paar Leisten 15a, 15c bzw. 15b, 15d angeordnet sind, die zur Führung der Platten 2a bzw. 2b dienen. Der Bewegungsbereich der Platten ist jeweils durch Stifte 14a bzw. 14b auf der Platte 9 und entsprechenden Nuten 13a bzw. 13b in den Platten 2a und 2b begrenzt.

Einander gegenüberliegend besitzen die Platten zwei V-förmige Einbuchtungen 5a bzw. 5b, die im zusammengeschobenen Zustand der Platten eine diagonalgeteilte, rechteckige Öffnung 4 bilden. Die aneinanderstoßenden Seiten der Platten 2a und 2b sind mit je einer Abstufung 3a bzw. 3b versehen, auf die die Proben gelegt werden. Die zurückgesetzten oberen Kanten der Abstufung 3a und 3b verlaufen in den Randbereichen 7 der Platten parallel und weisen je einen Anschlag in Form von Gewindestiften 8a bzw. 8b für von den Kanten 7 gehaltene rechteckige Proben auf. Im mittleren Bereich besitzen die oberen Ränder der Abstufung 3 vier Einkerbungen 6a—6d, die bei entsprechendem Auszug der Platten in die durch federnde Drähte 21a bzw. 21b gebildete Raststellung eine rechteckige Vertiefung zur Aufnahme von Standardobjektträgern bilden.

Mit Hilfe der Knöpfe 12a und 12b können die Platten 2a und 2b bewegt werden. Sie gleiten wie Fig. 3 zeigt unter Reibung schwergängig an Kunststoffstäben 16a und 16b, die in V-förmigen Nuten der Leisten 15 mittels Stiften 17 gesichert sind.

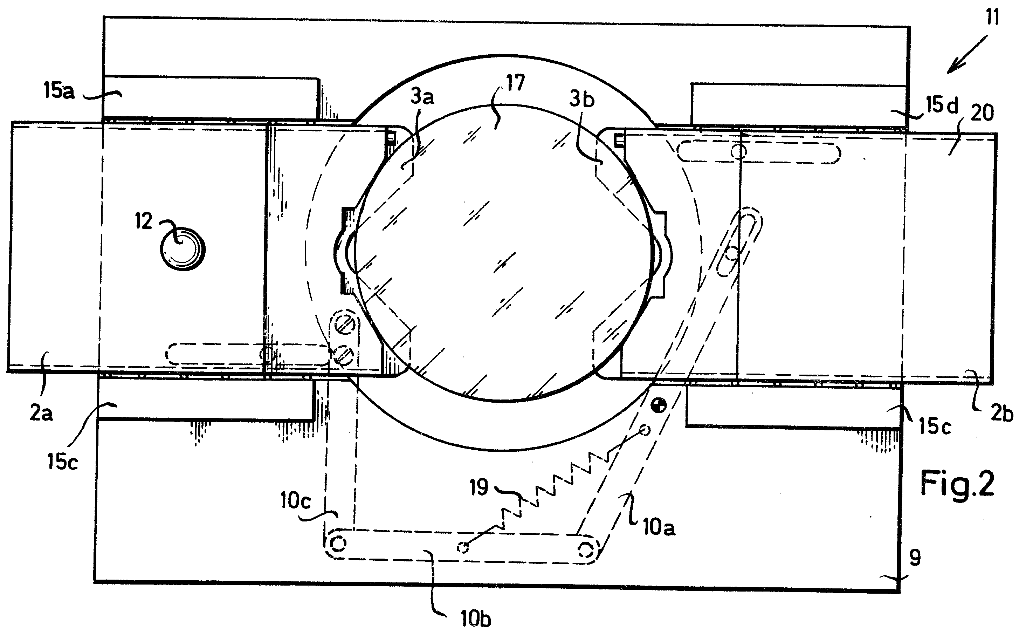

Bei der in Fig. 2 gezeigten, modifizierten Ausführungsform des Objekthalters 11 laufen die Platten 2 dagegen leichtgängig über Kugeln 20 in den Führungsleisten 15. Die Platte 2b ist über einen Hebel 10a, dessen Drehpunkt sich auf der Platte 9 befindet, und ein Gestänge 10b, 10c bewegungsmäßig gegenläufig mit der Platte 2a gekoppelt. Eine Feder 19 spannt beide Platten 2a und 2b gegeneinander vor.

**Patentansprüche**

1. Objekthalter für inverse Mikroskope zur Aufnahme von Objekten mit unterschiedlichen Abmessungen, dadurch gekennzeichnet, daß der Objekthalter (1) im wesentlichen aus zwei gegeneinander verschiebbar gelagerten Platten (2a, 2b) besteht, deren einander gegenüberliegende Seiten mit Abstufungen (3a, 3b) zum Aufsetzen der Proben (17) versehene Einbuchtungen (5a, 5b) besitzen, die sich zu einer durch Verschieben der Platten (2a, 2b) in ihren Abmessungen veränderlichen Öffnung (4) ergänzen.

2. Objekthalter nach Anspruch 1, dadurch gekennzeichnet, daß die Einbuchtungen (5) im wesentlichen V-Form besitzen.

3. Objekthalter nach Anspruch 1—2, dadurch gekennzeichnet, daß die zurücktretenden Teile der Stufen (3) je ein Paar Einkerbungen (6a, 6c; 6b, 6d) zur Aufnahme von Standard-Objektträgern besitzen.

4. Objekthalter nach Anspruch 1—3, dadurch gekennzeichnet, daß die zurücktretenden Teile der Stufen (3a, 3b) im Randbereich der beiden Platten (2a, b) zur Aufnahme rechteckiger Proben parallel zueinander verlaufen und mindestens ein seitlicher Anschlag (8a, 8b) vorgesehen ist.

5. Objekthalter nach Anspruch 1—4, dadurch gekennzeichnet, daß beide Platten (2) frei gegeneinander beweglich sind und im Reibschluß mit ihren Führungen (9, 15) stehen.

6. Objekthalter nach Anspruch 1—4, gekennzeichnet durch eine Kopplung (10) zwischen den Platten (2), die bei Verschiebung einer Platte (2a) die zweite (2b) gegenläufig bewegt.

7. Objekthalter nach Anspruch 1—4 und 6, gekennzeichnet durch Federmittel (19), die beide Platten (2) gegeneinander vorspannen.

**Claims**

1. A specimen holder for inverted microscopes for receiving specimens of different dimensions, characterized by the fact that the specimen holder (1) consists essentially of two plates (2a, 2b) which are mounted for displacement with respect to each other, the two opposite sides of said plates having indentations (5a, 5b) provided with steps (3a, 3b) for the placing on of the specimens (17), said indentations supplementing each other to form an opening (4) the dimensions of which can be varied by displacing the plates (2a, 2b).

2. A specimen holder according to claim 1, characterized by the fact that the indentations (5) are of substantially V shape.

3. A specimen holder according to claim 1 to 2, characterized by the fact that each of the receding portions of the steps (3) has a pair of notches (6a, 6c; 6b, 6d) to receive standard specimen slides.

4. A specimen holder according to claims 1 to 3, characterized by the fact that the receding portions of the steps (3a, 3b) extend parallel to each other in the end region of the two plates (2a, 2b) in order to receive rectangular specimens and that at least one lateral stop (8a, 8b) is provided.

5. A specimen holder according to claims 1 to 4, characterized by the fact that both plates (2) are freely movable with respect to each other and are in frictional engagement with their guides (9, 15).

6. A specimen holder according to claims 1 to 4, characterized by a coupling (10) between the plates (2) which coupling, upon the displacement of one plate (2a), moves the second plate (2b) in opposite direction.

7. A specimen holder according to claims 1 to 4 and 6, characterized by spring means (19) which urge the two plates (2) towards each other.

**Revendications**

1. Platine porte-objet pour microscopes inversés, destinée à recevoir des objets de dimensions variables, caractérisée en ce que la platine porte-objet (1) se compose essentiellement de deux plaques (2a, 2b), disposées de façon à pouvoir se rapprocher et s'éloigner l'une de l'autre, plaques dont les côtés en regard possèdent des échancrures (5a, 5b) garnies d'étagements (3a, 3b) destinées à recevoir les objets (17), échancrures qui se complètent l'une l'autre en formant une ouverture (4) dont on peut faire varier les dimensions en déplaçant les plaques (2a, 2b).

2. Platine porte-objet selon la revendication 1, caractérisée en ce que les échancrures (5) ont essentiellement la forme d'un V.

3. Platine porte-objet selon l'une quelconque des revendications 1 ou 2, caractérisée en ce que les parties en retrait des étagements (3) possèdent chacune une paire d'encoches (6a, 6c; 6b, 6d) pour recevoir des platines porte-objets normalisées.

4. Platine porte-objet selon l'une quelconque des revendications 1 à 3, caractérisée en ce que les parties en retrait des étagements (3a, 3b) sont parallèles l'une à l'autre dans la zone marginale des deux plaques (2a, b) pour recevoir les objets rectangulaires, et qu'au moins une butée latérale (8a, 8b) est prévue.

5. Platine porte-objet selon l'une quelconque des revendications 1 à 4, caractérisée en ce que les deux plaques (2) se déplacent librement l'une par rapport à l'autre et coulissent dans leurs guidages (9, 15) par frottement.

6. Platine porte-objet selon l'une quelconque des revendications 1 à 4, caractérisée en ce qu'elle possède un couplage (10) entre les plaques (2), de telle sorte qu'un déplacement de la plaque (2a) entraîne un déplacement de la plaque (2b) dans le sens contraire.

7. Platine porte-objet selon l'une quelconque des revendications 1 à 4 ou 6, caractérisée en ce qu'elle possède des moyens de ressort (19) qui serrent les deux plaques l'une contre l'autre.

Fig.1

0 045 010

Fig.2

## Fig.3